Europäisches Patentamt

European Patent Office

Office européen des brevets

(19)

(11) **EP 0 440 301 B1**

(12) **FASCICULE DE BREVET EUROPEEN**

(45) Date de publication et mention
de la délivrance du brevet:
**01.10.1997 Bulletin 1997/40**

(51) Int Cl.⁶: **G06T 1/60**

(21) Numéro de dépôt: **91200185.6**

(22) Date de dépôt: **30.01.1991**

(54) **Procédé de stockage en mémoire pour le traitement d'images, et dispositif pour la mise en oeuvre du procédé**

Abspeicherungsverfahren für die Bildverarbeitung und Gerät, um dieses einzusetzen

Storage method for image processing and device to implement the procedure

(84) Etats contractants désignés:
**DE FR GB IT**

(30) Priorité: **02.02.1990 FR 9001241**

(43) Date de publication de la demande:
**07.08.1991 Bulletin 1991/32**

(73) Titulaires:
- **LABORATOIRES D'ELECTRONIQUE PHILIPS S.A.S.**
  **94450 Limeil-Brévannes (FR)**
  Etats contractants désignés:
  **FR**
- **Philips Electronics N.V.**
  **5621 BA Eindhoven (NL)**
  Etats contractants désignés:
  **DE GB IT**

(72) Inventeurs:
- **Fautier, Thierry, Société Civile S.P.I.D.**
  **F-75008 Paris (FR)**
- **Michel, Jean-Pierre, Société Civile S.P.I.D.**
  **F-75008 Paris (FR)**

(74) Mandataire: **Caron, Jean et al**
**Société Civile S.P.I.D.**
**156, Boulevard Haussmann**
**75008 Paris (FR)**

(56) Documents cités:
**EP-A- 0 085 210**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un procédé pour gérer le stockage dans une mémoire d'un système de traitement d'images, ladite mémoire de type dynamique étant organisée en rangées et en colonnes avec accès par salves, procédé dans lequel les images sont traitées par blocs, chacun des blocs étant carré ou rectangulaire et contenant plusieurs pixels dans chaque direction horizontale et verticale, la description des pixels à l'intérieur d'un bloc étant faite en considérant les pixels les uns après les autres par lignes parallèles successives dans le bloc, les dimensions horizontale et verticale des blocs, exprimées en nombre de pixels, étant des puissances entières de deux.

Elle concerne aussi un dispositif muni d'une mémoire de type dynamique, organisée en rangées et en colonnes avec accès par salves, pour stocker une image traitée par blocs, chacun desdits blocs étant un carré ou un rectangle dont les dimensions horizontale et verticale exprimées en nombre de pixels sont des puissances entières de deux, la description des pixels contenus dans un bloc étant faite en considérant les pixels par lignes parallèles successives dans le bloc.

Pour les algorithmes de compression d'images à bas débit d'informations, le traitement temporel tient une place importante, nécessitant une capacité de mémorisation importante. En outre, pour ce type d'algorithmes, le nombre de pixels à traiter par unité de temps est fixe, ceci afin d'une part de ne pas dégrader les performances des algorithmes et d'autre part de fixer une limite à la complexité des systèmes de codage et de décodage. Une conséquence directe est que le nombre de pixels à coder dans une image et par conséquent le nombre de mots mémoire nécessaire à son stockage est borné.

Dans certaines applications de compression d'images où il est souhaitable d'admettre un format d'images (facteur de forme) variable, apparait le besoin de trouver une adéquation entre le format variable des images et la taille fixe de la mémoire destinée à recevoir des images lors du processus de décodage. Un tel cas se présente dans une application multi-média comme le Disque Compact Interactif ("CDI"), où le format des images est variable.

Un des points critiques pour la réalisation de décodeurs d'images comprimées sur la base de blocs se situe au niveau de la grande quantité nécessaire d'accès à la mémoire. Les mémoires habituellement utilisées pour des raisons de coût et d'intégration sont des mémoires dynamiques caractérisées par un accès en deux temps consistant à fournir dans un premier temps l'adresse "rangée" puis après un délai, fixé selon la mémoire utilisée, à fournir dans un second temps l'adresse "colonne", et enfin accéder à l'information après un autre délai. L'accès peut être plus rapide quand les informations à lire sont situées sur la même rangée soit à des adresses "colonne" consécutives, en utilisant un mode dit "nibble", soit à des adresses quelconques en utilisant un mode d'accès dit par rafales ("static column mode" ou "page mode"). Dans les deux cas, l'accès à la première information correspond aux deux temps décrits plus haut, mais l'accès aux informations suivantes ne prend plus que le second temps.

Un autre inconvénient réside dans le mauvais rendement de l'utilisation de la place mémoire lorsque le nombre de pixels par lignes ou le nombre de lignes par image n'est pas un multiple ou un sous-multiple du nombre de colonnes ou du nombre de rangées des boîtiers mémoire.

Il est connu du document EP-A-0 085 210 d'utiliser un adressage particulier avec des sauts d'adresse dans la mémoire pour des lignes successives d'image, dans le but de retrouver plus facilement des amas de points particuliers. Néanmoins ce document ne tient pas compte du fait que l'image serait divisée en blocs réguliers constituant une sorte de damier.

L'idée de base de l'invention s'appuie sur le fait que les algorithmes de compression d'images sont basés sur des blocs dont les dimensions horizontales et verticales sont des sous-multiples des dimensions de l'image. En outre, la présente invention tire aussi profit de l'existence du mode d'accès par rafales dans les mémoires utilisées. Ainsi selon l'invention; la description complète de chaque bloc est placée dans la mémoire comme revendiqué dans la revendication 1.

L'invention prend un intérêt particulier lorsque le format d'image est variable. Elle permet d'utiliser la capacité mémoire strictement nécessaire pour stocker une image, et ceci quel que soit le facteur de forme de celle-ci. L'invention permet en outre d'accéder plus rapidement à des blocs dans l'image.

On place dans la mémoire les contenus des différents blocs en incrémentant l'adresse colonne jusqu'à sa valeur limite, après quoi on ramène cette adresse à zéro et on incrémente l'adresse rangée, et ainsi de suite.

Les opérations de calcul de l'adresse mémoire du début d'un bloc contenant un pixel donné sont réalisées sur des valeurs représentées par des mots binaires au moyen de dichotomies qui fournissent en tant que résultat d'une division entière les bits dont le rang est supérieur à la susdite puissance de deux (m ou p), et en tant que résultat d'une opération modulo les bits dont le rang est inférieur ou égal à cette même puissance de deux.

Un dispositif selon le préambule ci-dessus, pour traiter une image par blocs, chacun desdits blocs ayant des dimensions horizontale H et verticale V exprimées en nombre de pixels qui sont des puissances entières de deux, respectivement m et p, et la description des pixels contenus dans un bloc étant faite en considérant les pixels par lignes parallèles successives dans le bloc, la description complète de chaque bloc étant placée en mémoire dans l'ordre de description du bloc et les blocs étant placés l'un à la suite de l'autre dans la mémoire, comporte des moyens pour calculer le numéro d'un bloc dans la mémoire à partir des coordonnées x, y d'un pixel de ce bloc, moyens qui sont constitués de deux opérateurs matériels qui à partir des mots binaires représentant les valeurs de x et de y en extraient les bits de poids supérieur à respectivement m et p, d'un multiplieur auquel sont fournis en tant que multiplicandes, d'une part le nombre de blocs par ligne d'image, et d'autre part le mot binaire fait des bits extraits par l'un des susdits opérateurs dans le mot binaire représentant y (bits qui représentent la coordonnée verticale dans l'image du bloc contenant le pixel), et d'un additionneur auquel sont fournis pour y être additionnés, d'une part le résultat issu du susdit multiplieur, et d'autre part le mot binaire constitué par les bits extraits par l'autre des susdits opérateurs dans le mot binaire représentant x (bits qui représentent la coordonnée horizontale dans l'image du bloc contenant le pixel).

En outre, le dispositif comporte avantageusement des moyens pour calculer l'adresse relative d'un pixel dans un bloc à partir de son adresse x, y dans l'image, qui sont constitués de deux opérateurs matériels extrayant respectivement à partir des mots binaires représentant la valeur de x et de y, les m et p bits de plus faible poids, les deux groupes de blocs extraits étant fournis à un autre opérateur matériel qui décale de m bits vers la gauche le groupe de bits extrait de y par l'un des susdits deux opérateurs, et le concatène avec le groupe de bits extrait de x par l'autre des susdits deux opérateurs.

Le dispositif comporte en outre avantageusement des moyens pour calculer les adresses rangée et colonne d'un pixel dans la mémoire à partir du numéro du bloc qui contient ce pixel et de l'adresse relative du pixel dans le bloc, qui sont constitués d'un opérateur séparant dans le mot binaire représentant le numéro du bloc les "e" bits de plus faible poids, où "e" est un entier tel que deux puissance "e" est égal au nombre de blocs par rangée de mémoire, ces "e" bits étant amenés à un élément de concaténation où ils sont décalés vers la gauche et concaténés avec les bits représentant l'adresse relative du pixel dans le bloc, pour fournir la composante de l'adresse recherchée dans la direction horizontale, c'est-à-dire le numéro de colonne de mémoire, les autres bits (de poids supérieur à "e") fournissant la composante de l'adresse recherchée dans la direction verticale, c'est-à-dire le numéro de rangée de mémoire.

L'image traitée par blocs est donc organisée en un réseau de blocs régulièrement disposés (comme un damier). Néanmoins, lorsqu'une méthode de compensation de mouvement, connue en soi, est utilisée, le décodage d'images comprimées impose d'accéder non seulement aux données d'un bloc correspondant exactement à un bloc H*V du réseau de blocs d'une image, mais aussi à un bloc décalé horizontalement et/ou verticalement par rapport à un bloc du réseau et par conséquent appartenant à quatre blocs différents du réseau. A cet effet, pour calculer l'adresse en mémoire des pixels contenus dans un bloc de l'image qui est décalé par rapport à un bloc du susdit réseau, le calcul étant fait à partir de l'adresse de ce bloc du réseau, dit bloc de référence, et du décalage du bloc décalé par rapport à ce bloc de référence, en connaissant le nombre de blocs contenus horizontalement dans l'image, le dispositif comporte un ou plusieurs des ensembles suivants :

- des premiers moyens pour, à partir du décalage du bloc décalé, calculer de combien le bloc est décalé horizontalement et verticalement par rapport au bloc de référence et pour calculer sa position relative par rapport au bloc du réseau qui contient son point de départ, horizontalement et verticalement,
- des seconds moyens pour calculer à partir du décalage du bloc décalé, de l'adresse du bloc de référence, et du nombre de blocs par image en horizontal, le numéro, dans l'image, du bloc qui contient le point de départ du bloc décalé,
- des troisièmes moyens pour générer les deux composantes de l'adresse relative du pixel à l'intérieur du bloc dont le numéro est donné par les moyens précédents,
- des quatrièmes moyens pour décaler vers la gauche les bits de la composante verticale de l'adresse relative du pixel et les concaténer avec les bits de la composante horizontale de cette adresse relative, pour fournir une adresse "linéaire" relative dans le bloc de la mémoire (on entend par "adresse linéaire" le fait qu'elle est calculée en numérotant consécutivement tous les pixels d'un bloc à partir du début),
- des cinquièmes moyens constitués d'un opérateur séparant dans le mot binaire indiquant le numéro du bloc les "e" bits de plus faible poids, où "e" est un entier tel que deux puissance "e" est égal au nombre de blocs par rangée de mémoire, ces "e" bits étant amenés à un élément de concaténation où ils sont décalés vers la gauche et concaténés avec les bits issus des moyens précédents pour fournir la composante de l'adresse recherchée dans la direction horizontale (numéro de colonne de mémoire), les autres bits dudit mot binaire fournissant la composante de l'adresse recherchée dans la direction verticale (numéro de rangée de mémoire).

Les susdits premiers moyens peuvent avantageusement être constitués d'un opérateur séparant les m bits de plus faible poids dans le mot binaire exprimant la valeur dans la direction horizontale du décalage du bloc décalé par rapport au bloc de référence, et d'un opérateur séparant les p bits de plus faible poids dans le mot binaire exprimant la valeur dans la direction verticale du décalage du bloc décalé par rapport au bloc de référence.

Les susdits seconds moyens peuvent avantageusement être constitués d'un premier additionneur faisant la somme de la valeur de l'adresse du bloc de référence dans la direction verticale et de la valeur du décalage du bloc décalé dans la direction verticale, d'un multiplieur pour multiplier le résultat délivré par ce premier additionneur avec la valeur du nombre de blocs par image dans la direction horizontale, d'un deuxième additionneur faisant la somme de la valeur de l'adresse du bloc de référence dans la direction horizontale et de la valeur du décalage du bloc décalé dans la direction horizontale, et d'un troisième additionneur faisant la somme de la valeur délivrée par le deuxième additionneur et de la valeur délivrée par le multiplieur.

Les susdits troisièmes moyens peuvent avantageusement être constitués par un ou plusieurs des groupes d'éléments suivants :

- un groupe comprenant un multiplexeur pour délivrer une valeur choisie entre, soit zéro, soit la valeur de la position relative dans la direction horizontale du bloc décalé par rapport au bloc du réseau qui contient son point de départ, et un compteur qui peut être initialisé avec la valeur délivrée par le multiplexeur et qui au rythme d'une horloge délivre la composante horizontale d'une adresse relative du pixel,
- un groupe constitué de façon identique et qui traite les éléments correspondants dans la direction verticale.
- un groupe comprenant un circuit arithmétique délivrant le complément à deux du mot binaire exprimant la valeur de la position relative, dans la direction horizontale, du bloc décalé par rapport au bloc du réseau qui contient son point de départ, un multiplexeur pour délivrer une valeur choisie entre, soit zéro, soit le susdit complément à deux, et un compteur qui peut être initialisé avec la valeur délivrée par le multiplexeur et qui au rythme d'une horloge délivre la composante horizontale d'une adresse relative du pixel,
- un groupe constitué de façon identique et qui traite les éléments correspondants dans la direction verticale.

La description qui va suivre, en regard des dessins annexés décrivant des exemples non limitatifs fera bien comprendre comment l'invention peut être réalisée.

La figure 1 illustre un inconvénient du procédé dit "bit map".

La figure 2 illustre le mode de description par blocs dans une image.

La figure 3 illustre le rangement de la description des blocs en mémoire.

La figure 4 est un schéma du dispositif pour calculer les adresses.

La figure 5 illustre la position dans une image d'un bloc compensé en mouvement.

La figure 6 illustre les positions occupées dans la mémoire par le bloc E de la figure 5.

La figure 7 illustre un dispositif pour calculer les adresses en mémoire des pixels d'un bloc compensé en mouvement.

Les figures 8 à 11 illustrent plus en détail différents modules du dispositif de la figure 7.

La figure 12 est un diagramme du temps pour les opérations réalisées par le dispositif GENADR des figures 7 et 8.

Les figures 13 et 14 illustrent une réalisation simplifiée du dispositif de la figure 7 pour le cas d'un bloc non compensé en mouvement.

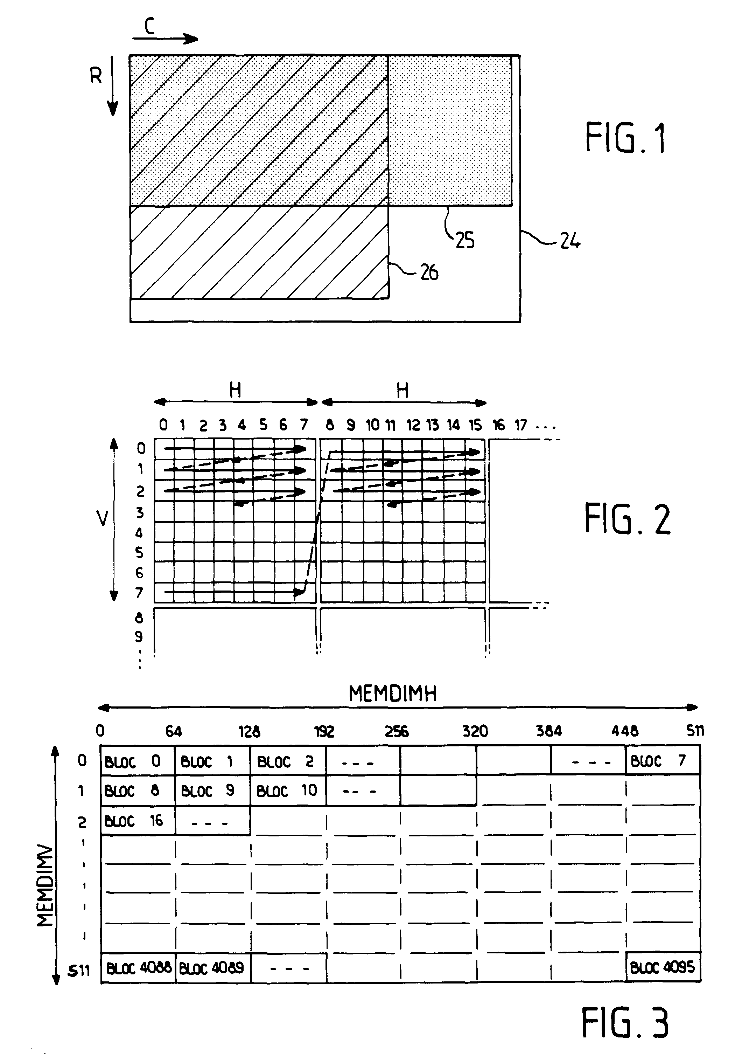

Sur la figure 1, le cadre 24 représente une mémoire organisée en rangées R et en colonnes C. Lorsqu'une organisation "bit map" est employée, la rangée de mémoire doit être assez longue pour contenir la largeur de l'image 25 qui y est plaquée. Mais si l'on désire que le format d'image puisse être changé et que par exemple une image 26 moins large mais plus haute puisse aussi être utilisée, le nombre de rangées de la mémoire doit être suffisant pour contenir l'image 26. En outre comme le nombre de pixels par ligne ou le nombre de lignes par image n est pas un multiple ou un sous-multiple du nombre de colonnes ou du nombre de rangées des boîtiers mémoire, la dimension de la mémoire est encore un peu plus grande que celle correspondant à la largeur de l'image 25 par la hauteur de l'image 26. La mémoire peut contenir une image indiquée par le cadre 24 alors qu'elle aura seulement à contenir une image 25 ou 26. Si par exemple le format horizontal et le format vertical sont susceptibles de varier dans des rapports 1/2, 1, ou 2, il faut disposer d'une mémoire quatre fois plus importante que celle contenant juste le nombre de pixels à afficher.

Le traitement d'une image par blocs est illustré sur la figure 2, où sont représentés deux blocs avec leur dimensions horizontale H et verticale V qui sont ici toutes deux égales à 8. L'ordre dans lequel les descriptions des pixels sont traitées et rangées dans la mémoire est indiqué par des flèches. Les graduations indiquent les coordonnées des pixels dans l'image selon x et selon y. La figure représente les deux premiers blocs en haut et à gauche d'une image et suggère quelques autres blocs en les représentant partiellement : une image est ainsi constituée d'un réseau de blocs régulièrement disposés comme un damier.

Une mémoire organisée avec une dimension "horizontale" MEMDIMH de 512 colonnes et une dimension "verticale" MEMDIMV de 512 rangées est schématisée sur la figure 3, où sont indiquées les positions dans lesquelles sont rangées les descriptions des blocs. La notion d'horizontale ou de verticale est bien entendu une commodité de langage qui n'a rien à voir avec la disposition physique des éléments de mémoire, il ne s'agit en fait que des deux dimensions d'une matrice. Les blocs référencés BLOC0 et BLOC1, par exemple, correspondent respectivement à la position en mémoire de la description du contenu du premier et du second bloc en haut et à gauche d'une image, qui sont représentés sur la figure 2.

La représentation de la figure 3 correspond au cas où une rangée de la mémoire contient un nombre entier de blocs (ici huit blocs : de 0 à 7) et où le nombre de rangées de mémoire (ici cinq cent douze rangées : de 0 à 511) multiplié par le nombre de blocs par rangée est égal au nombre total (entier) de blocs.

Dans un cas non idéal, il suffirait, si à un moment donné la place restante dans une rangée de la mémoire n'est pas suffisante pour la description complète d'un bloc, de reporter le début de la description de ce bloc à la rangée suivante. Néanmoins, pour des commodités de description ultérieure, on supposera que la dimension horizontale MEMDIMH de la mémoire est un multiple de H*V, et on nommera k l'entier égal à MEMDIMH / (H*V). Cette hypothèse est tout à fait réaliste car en pratique MEMDIMH, H, V sont toujours des puissances de deux.

Pour éviter toute ambiguïté, en l'absence d'autre précision, on parlera d'une "position" lorsqu'il s'agit de position dans une image, et d'une "adresse" lorsqu'il s'agit de position dans une mémoire.

L'image à mémoriser possède les dimensions horizontales et verticales IMADIMH et IMADIMV, avec IMADIMH multiple de H et IMADIMV multiple de V. On suppose bien entendu que la mémoire est suffisamment grande pour mémoriser tous les pixels de l'image c'est-à-dire :

MEMDIMH*MEMDIMV > IMADIMH*IMADIMV.

On posera :

2 puissance m est égal à H
2 puissance p est égal à V
"div" devra être compris comme l'opérateur de division entière
"mod" devra être compris comme l'opérateur modulo.

Puisque le mode d'adressage est à base de blocs H par V, on détermine dans un premier temps le numéro du bloc H*V dans l'image à partir des coordonnées du pixel x, y dans l'image. Pour cela on calcule les coordonnées horizontales et verticales du premier élément du bloc H*V dans l'image, ADBLOCH et ADBLOCV :

$$\text{ADBLOCH} = x \text{ div } H \tag{1}$$

$$\text{ADBLOCV} = y \text{ div } V \tag{2}$$

On en déduit le numéro de bloc dans l'image NUMBLOC, compté en une suite continue à partir du premier bloc en haut à gauche (figure 3) :

$$\text{NUMBLOC} = (\text{IMADIMH div } H) * \text{ADBLOCV} + \text{ADBLOCH} \tag{3}$$

A partir des coordonnées de chaque pixel, on détermine les adresses relatives ADRELH, ADRELV du pixel à l'intérieur du bloc :

$$\text{ADRELH} = x \text{ mod } H \tag{4}$$

$$\text{ADRELV} = y \text{ mod } V \tag{5}$$

$$\text{ADREL} = \text{ADRELV} * H + \text{ADRELH} \tag{6}$$

Le calcul de l'adresse d'un bloc de l'image, BLOCH et BLOCV dans un adressage décrit selon l'invention s'effectue à partir de son numéro de bloc, NUMBLOC :

$$\text{BLOCH} = (\text{NUMBLOC mod } k) * (H*V) \tag{7}$$

$$\text{BLOCV} = (\text{NUMBLOC div } k) \tag{8}$$

On dispose de tous les éléments pour calculer l'adresse ADRX de la rangée de mémoire et l'adresse ADRY de la colonne de mémoire, pour un pixel d'une image :

$$ADRX = BLOCH + ADREL \tag{9}$$

$$ADRY = BLOCV \tag{10}$$

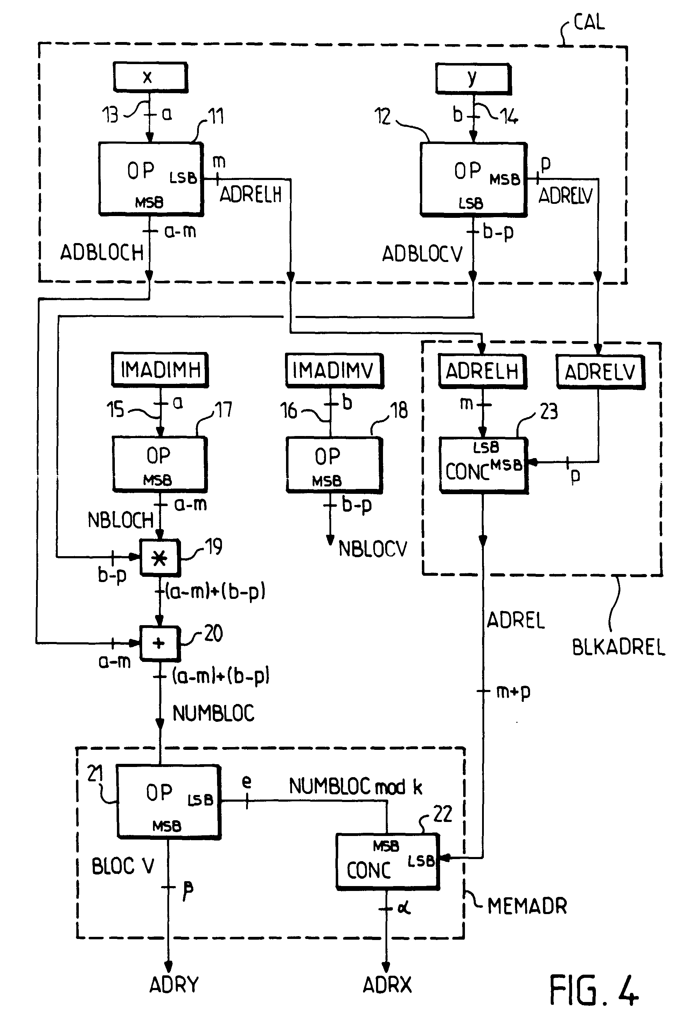

Le mode de réalisation du calcul de ADRX et ADRY à partir des calculs développés précédemment, en partant des coordonnées x, y, du pixel dans l'image, va être décrit maintenant en référence à la figure 4. On posera :

    2 puissance a est égal à IMADIMH
    2 puissance b est égal à IMADIMV
    2 puissance alpha est égal à MEMDIMH
    2 puissance beta est égal à MEMDIMV
    2 puissance e est égal à k

avec la condition de possibilité de stockage de l'image :

$$alpha + beta \geq a + b$$

Pour l'exemple présenté on a choisi des blocs de 8 par 8 pixels mais la méthode s'applique à d'autres valeurs de H et V.

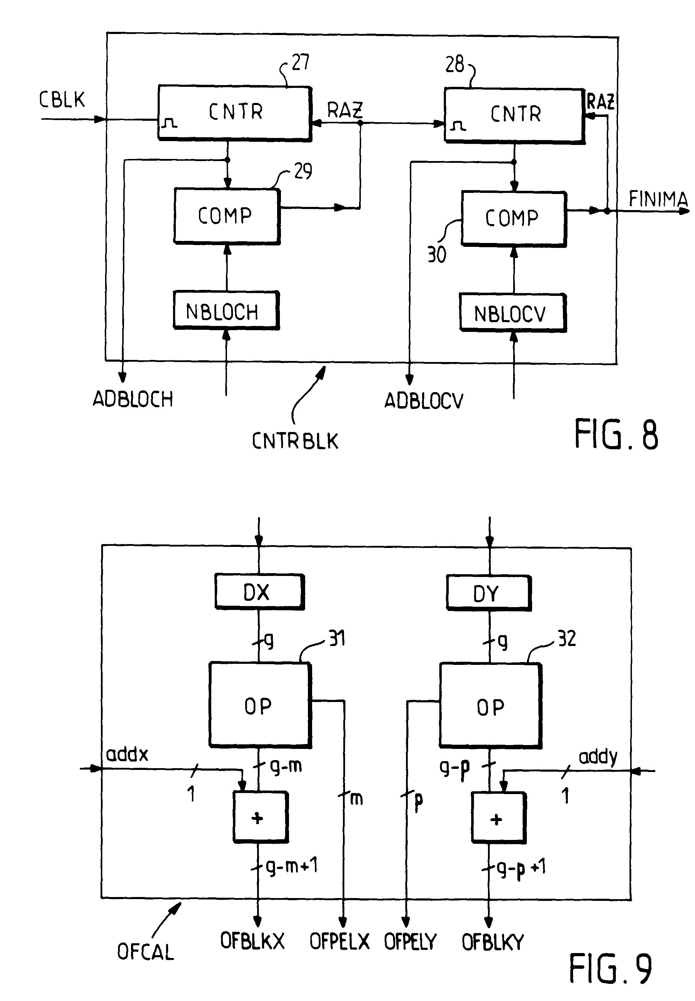

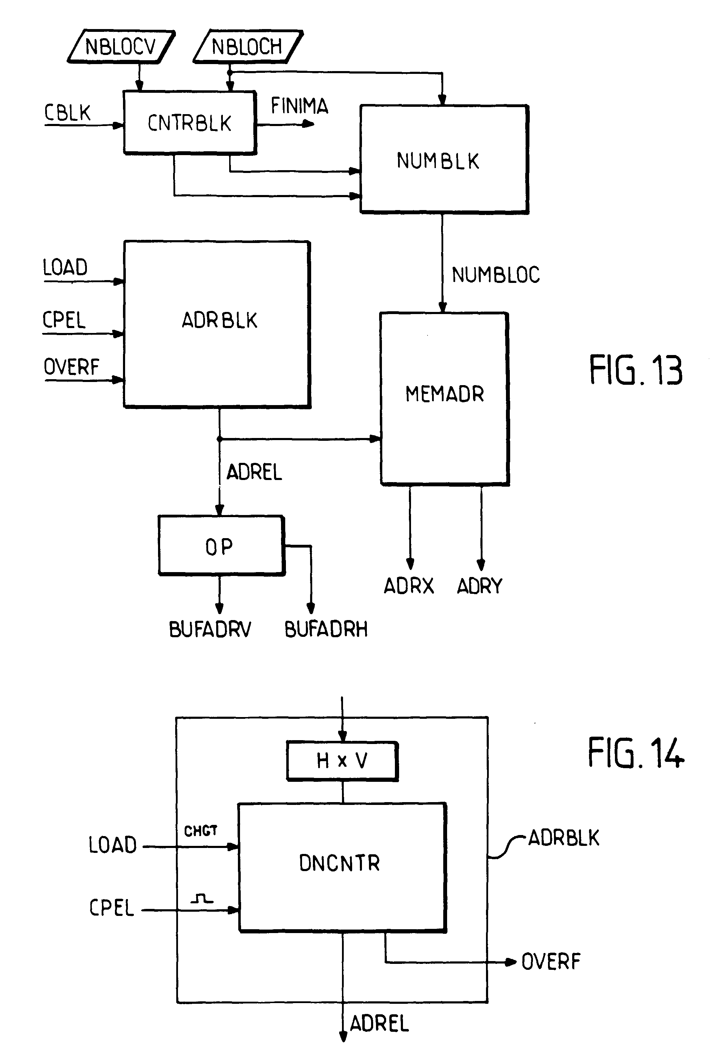

Les valeurs choisies pour H, V et k sont des puissances entières de 2. Dans ce cas les opérateurs div et mod peuvent être réalisés de manière simple : il suffit de séparer un champ de bits en deux champs de bits notés MSB et LSB, qui fournissent respectivement les valeurs résultant des opérations div et mod (le point de séparation des bits dépend de la valeur du diviseur H, V ou k). Cette dichotomie est réalisée par les modules marqués "OP" sur la figure 4 (et sur les figures 9 et 13). Le module "CONC" crée un champ de bits à partir de la concaténation de deux champs de bits MSB et LSB. Les autres modules : "+" (additioneur) et "*" (multiplieur) sont connus de l'homme du métier.

Sauf mention contraire, les modules opérateurs OP réalisent une division entière par 8, c'est-à-dire que la séparation s'effectue entre le troisième et le quatrième bit.

A partir des coordonnées x et y du pixel à traiter, amenées sur des connexions 13 et 14 munies respectivement de a fils et b fils, les modules OP respectivement 11 et 12 fournissent les valeurs ADBLOCH, ADRELH, ADBLOCV, ADRELV, selon les formules (1) (2) (4) (5) indiquées plus haut, sur des connexions munies respectivement de a-m fils, m fils, b-p fils et p fils.

A partir des valeurs ADRELV et ADRELH, le module CONC 23 décale les bits de ADRELV de m positions ce qui revient à multiplier par H, et les concatène avec les bits de ADRELH pour réaliser la formule (6) indiquée plus haut, et fournit ainsi ADREL sur une connexion munie de p+m fils.

A partir des valeurs IMADIMH et IMADIMV sur des connexions 15 et 16 munies respectivement de a et de b fils, le module OP 18, qui utilise comme diviseur V, fournit sur une connexion munie de b-p fils une valeur NBLOCV qui représente le nombre de blocs verticalement dans l'image, et le module OP 17, qui utilise comme diviseur H, fournit sur une connexion munie de a-m fils la valeur NBLOCH qui est égale à IMADIMH div H de la formule (3), c'est-à-dire le nombre de blocs horizontalement dans l'image. Pour réaliser la formule (3), cette valeur est multipliée par ADBLOCV dans le multiplieur 19 et le résultat de la multiplication est ajouté au terme ADBLOCH par un additionneur 20 qui fournit ainsi NUMBLOC.

La valeur NUMBLOC est reprise par un module OP 21 dont le diviseur est k, et qui fournit donc BLOCV = ADRY selon les formules (8) et (10), et NUMBLOC mod k (on a : $2^e = k$, donc le module OP sépare les "e" bits de poids le plus faible). Dans le module CONC 22, les bits de cette dernière valeur sont décalés de m+p positions, ce qui revient à multiplier par H*V pour réaliser la formule (7), et concaténés avec ADREL, ce qui réalise la formule (9) et fournit ADRX.

Ce qu'on a appelé de façon générale "description d'un pixel" peut concerner la luminance aussi bien que la chrominance.

Le schéma décrit ci-dessus illustre la démarche permettant le traitement matériel des formules. Lorsque les circuits d'affichage du système (qui ne font pas partie de l'invention) génèrent les coordonnées x, y du pixel à afficher dans l'image, le dispositif d'adressage décrit ci-dessus calcule les adresses ADRX et ADRY du pixel en mémoire et peut donc être utilisé pour l'affichage de l'image.

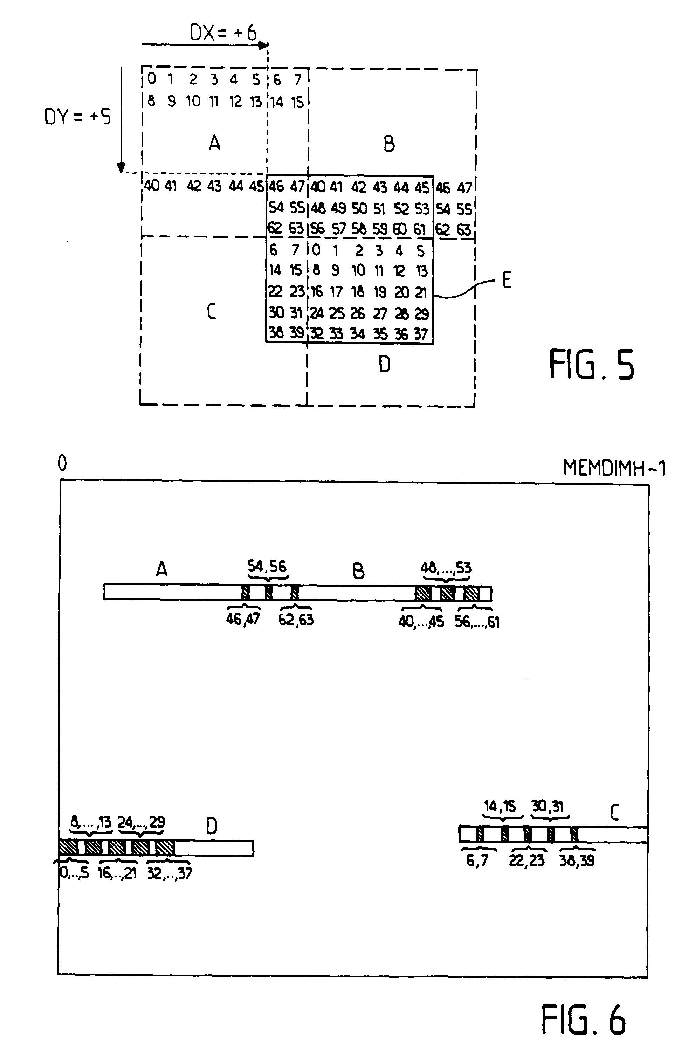

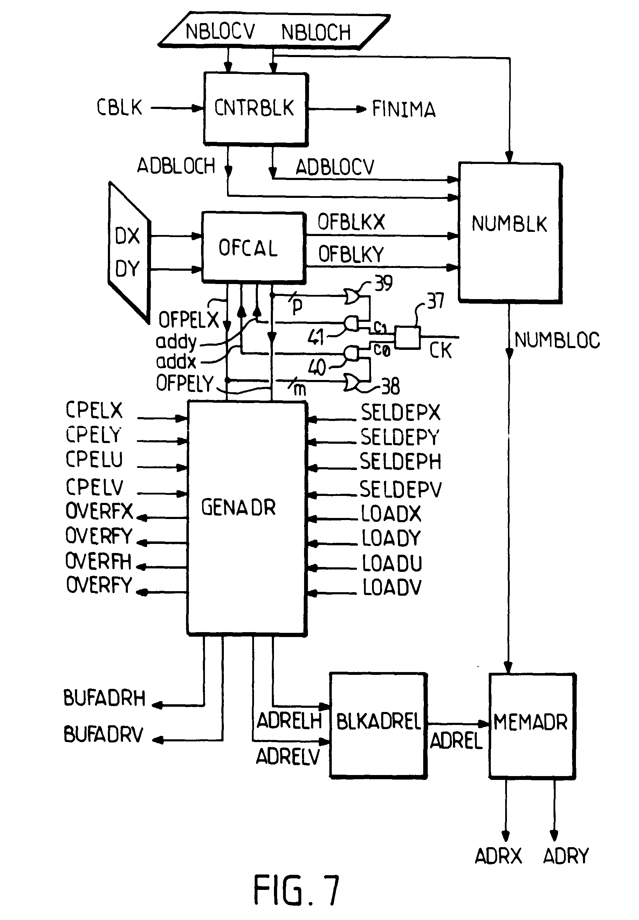

Lorsqu'une méthode de compensation de mouvement est utilisée, dans laquelle le décodage d'images comprimées impose d'accéder à un bloc décalé horizontalement et/ou verticalement par rapport au réseau (c'est-à-dire par rapport à un bloc du réseau) et par conséquent pouvant appartenir à au plus quatre blocs différents de ce réseau, un autre agencement est utilisé, qui sera décrit plus loin en référence aux figures 7 à 12. C'est le cas par exemple du bloc E de la figure 5, dont les pixels appartiennent aux quatre blocs A, B, C, D. De plus, le dispositif d'affichage doit pouvoir accéder à un ensemble de pixels constituant une ligne (ou un segment de ligne) d'une image.

Avant de procéder à l'affichage, le dispositif de décodage doit lire les pixels de l'image sous la forme "luminance + différences de couleur" (Y, U, V) pour générer des pixels définis par leur trois couleurs fondamentales (R, G, B). D'autre part pour des raisons de place on ne stocke de manière intermédiaire qu'une portion de ligne vidéo à l'intérieur du dispositif de décodage. Le dispositif d'adressage par bloc permet de disposer sur une même rangée mémoire de MEMDIMH / V pixels appartenant à une même ligne vidéo et par conséquent accessibles dans une même salve. Si l'on utilise une mémoire tampon d'une taille égale à MEMDIMH / V, on atteint les performances optimales de communication entre la mémoire de stockage et le dispositif de décodage.

On appelle "accès en rafale" une opération consistant en la séquence suivante :

- envoi à la mémoire d'une adresse "rangée" et du signal "RAS" (sélection d'adresse rangée) correspondant,
- envoi à la mémoire d'une adresse "colonne" et du signal "CAS" (sélection d'adresse colonne) correspondant,
- envoi à la mémoire d'une suite d'adresses "colonne" pour tous les pixels auxquels on désire accéder et qui sont situés sur la même rangée.

Dans un dispositif d'adressage "bit map", l'accès à un bloc H*V se fait par V accès en rafale de H pixels. Dans un dispositif où les images sont adressées par bloc, l'accès à un bloc de taille H*V se fait en un seul accès en rafale de H*V pixels dans le cas où le bloc auquel on accède se situe exactement sur une frontière de bloc et se fait au plus en quatre accès en rafale si le bloc se situe à cheval sur plusieurs blocs.

Par exemple, pour accéder au bloc E de la figure 5, qui représente la disposition physique du bloc dans une image, on prend l'adresse de début du bloc A à laquelle on ajoute successivement les adresses relatives dans ce bloc A : 46, 47, 54, 55, 62, 63, puis on prend l'adresse de début du bloc B avec successivement les adresses relatives dans le bloc B : 40 à 45, 48 à 53, 56 à 61, et ainsi de suite avec les blocs C et D.

La figure 6 montre la même séquence, mais cette fois du point de vue des positions en mémoire : on y retrouve les blocs A, B, C, D et les positions relatives des pixels dans chaque bloc, mentionnées au paragraphe précédent.

Si l'on traite des blocs dont la dimension V est strictement supérieure à 4, le dispositif d'adressage selon l'invention permet d'accéder à un bloc de taille H*V compensé en mouvement d'une manière plus rapide qu'avec un adressage "bit map", et pour les accès à un bloc correspondant exactement à un bloc mémoire, l'accès est plus rapide quelles que soient les valeurs de H et de V.

Les dispositifs décrits ci-après correspondent à la mise en oeuvre du procédé d'adressage lié au type d'accès particulier de la mémoire. La spécificité de l'accès (par rangée, par bloc,...) entraîne l'usage de dispositifs particuliers, adaptés au calcul d'adresse à réaliser.

Pour le traitement de blocs compensés en mouvement, on utilise un dispositif d'adressage qui est destiné à générer les adresses des pixels appartenant à un bloc dont l'adresse de départ est égale à l'adresse d'un bloc mémoire déplacé horizontalement de DX et verticalement de DY comme celui représenté par la figure 5 où E est le bloc compensé en mouvement par rapport au bloc A avec DX=+6 et DY=+5. Ce dispositif est décrit en référence à la figure 7. Il reçoit en entrée NBLOCH et NBLOCV, c'est-à-dire le nombres de blocs H*Y en horizontal et en vertical calculés par les modules 17 et 18 du circuit de la figure 4, ainsi que les déplacements ou décalages horizontaux DX et verticaux DY du bloc compensé en mouvement. Il engendre les adresses rangée ADRX et colonne ADRY du pixel en mémoire ainsi que les adresses rangée BUFADRH et colonne BUFADRV du même pixel dans une mémoire tampon destinée à recevoir le bloc compensé en mouvement.

A partir d'un signal de synchronisation de bloc CBLK, le dispositif CNTRBLK qui est représenté plus en détail à la figure 8 compte dans les compteurs CNTR 27 et 28 le numéro du bloc courant. Ce numéro est comparé en horizontal et en vertical, dans des comparateurs 29 et 30, respectivement avec les valeurs NBLOCH et NBLOCV. Le comparateur 29 remet à zéro le compteur 27 à chaque fin de ligne d'image et incrémente en même temps le compteur 28 d'une unité. Le comparateur 30 délivre un signal FINIMA qui indique que le dernier bloc de l'image vient d'être traité. Le dispositif CNTRBLK génère l'adresse de début du bloc courant ADBLOCH, ADBLOCV, comme le fait le dispositif de la figure 4, mais ici à partir du signal de synchronisation de blocs, et non pas à partir d'une adresse x, y de pixel.

Le dispositif OFCAL qui est chargé de calculer le décalage ou "offset" du bloc OFBLKX, OFBLKY et le décalage ou "offset" du pixel OFPELX, OFPELY à ajouter aux adresses bloc et pixel du bloc courant du fait de la compensation de mouvement, est représenté par la figure 9. Il est constitué d'un bloc OP 31 séparant les m bits de plus faible poids dans le mot binaire exprimant la valeur dans la direction horizontale DX du décalage du bloc décalé par rapport au bloc de référence, et d'un bloc OP 32 séparant les p bits de plus faible poids dans le mot binaire exprimant la valeur DY dans la direction verticale du décalage du bloc décalé par rapport au bloc de référence. Les bits de plus faible poids fournissent les valeurs OFPELX et OFPELY. Il faut noter que les décalages DX et DY sont fournis par un dispositif de détermination des mouvements qui est indépendant du présent dispositif (et ne fait pas partie de la présente invention), et que les décalages qu'il fournit peuvent dépasser huit pixels, si bien que le bloc déplacé peut avoir son point de départ en dehors du bloc de référence (autrement dit "g - m" n'est pas nul).

Pour reconstituer le bloc E (figure 5) il faut accéder aux pixels situés dans les blocs A, B, C et D. Pour ce faire, deux bits appelés addx et addy servent à désigner dans lequel des quatre carrés A, B, C, D on est en train de travailler. Ces bits addx et addy sont déterminés à partir des valeurs de décalage OFPELX et OFPELY, et d'un signal de synchronisation CK qui indique le changement de bloc au cours du parcours de A vers B puis C et D. Un circuit très simple à cet effet (figure 7) est constitué d'un compteur 37 qui compte les signaux CK. Ce compteur compte de zéro à trois puis repart à zéro. Le chiffre de comptage sort donc sur deux bits. En sortie du compteur 37, le bit de plus petit poids est relatif à addx, et le bit de plus fort poids est relatif à addy. Ainsi, pendant l'accès au bloc A, addx et addy ont une valeur nulle ; pendant l'accès au bloc B, addx a une valeur de 1 et addy une valeur nulle ; pendant l'accès au bloc C, addx a une valeur nulle, addy une valeur de 1 ; enfin pendant l'accès au bloc D, addx et addy ont une valeur de 1. Pour prendre en compte le cas où (dans l'une ou l'autre direction) le décalage serait exactement égal à un nombre entier de blocs, les bits de l'un des mots binaires OFPELX ou OFPELY étant alors tous égaux à zéro, ces valeurs OFPELX et OFPELY sont amenés en parallèle aux entrées (il y a autant d'entrées que de bits par mot) d'une porte OU respectivement 38, 39 dont la sortie est amenée à une entrée de commande d'une porte ET respectivement 40, 41, et les bits addx et addy doivent traverser respectivement la porte 40 ou la porte 41 pour être validés.

Les bits addx et addy sont enfin ajoutés par les modules "+" (figure 9) aux valeurs de sortie (bits de rang le plus élevé) des modules respectivement 31 et 32, pour fournir OFBLKX et OFBLKY.

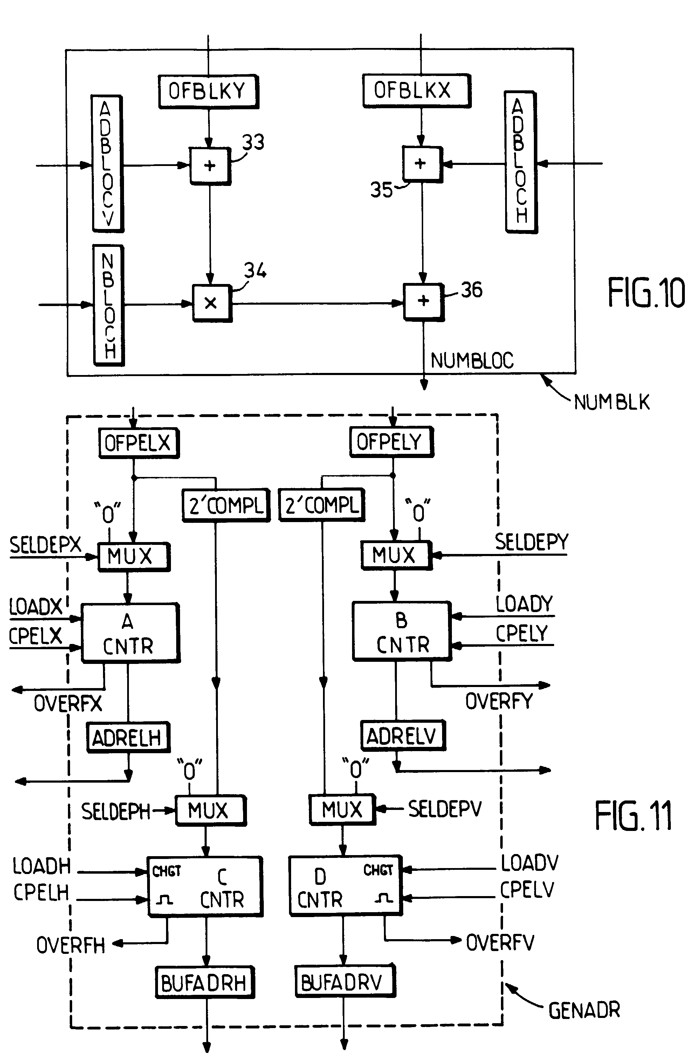

Le dispositif NUMBLK qui est représenté plus en détail par la figure 10 est constitué d'un premier additionneur 33 faisant la somme de la valeur de l'adresse du bloc de référence dans la direction verticale (ADBLOCV) et de la valeur du décalage du bloc décalé dans la direction verticale (OFBLKY), d'un multiplieur 34 pour multiplier le résultat délivré par ce premier additionneur avec la valeur du nombre de blocs par image dans la direction horizontale (NBLOCH), d'un deuxième additionneur 35 faisant la somme de la valeur de l'adresse du bloc de référence dans la direction horizontale (ADBLOCH) et de la valeur du décalage du bloc décalé dans la direction horizontale (OFBLKX), et d'un troisième additionneur 36 faisant la somme de la valeur délivrée par le deuxième additionneur et de la valeur délivrée par le multiplieur.

Le dispositif GENADR qui est représenté plus en détail par la figure 11 est chargé de générer l'adresse relative des pixels, à l'intérieur du bloc compensé en mouvement. Il convient de se référer en même temps aux figures 5 et 6 dont l'exemple sera utilisé pour expliquer la séquence d'adresses que doit générer le dispositif GENADR pour chaque bloc mémoire auquel appartient le bloc d'image décalé. Un dispositif de contrôle non représenté qui ne fait pas partie de l'invention et qui peut être facilement imaginé par l'homme du métier est chargé d'engendrer les signaux de contrôle de la partie opérative : les signaux CPELX, CPELY, CPELH, CPELV, sont des signaux d'horloge pour l'incrémentation des compteurs CNTR respectivement A, B, C, D, les signaux LOADX, LOADY, LOADH, LOADY, sont des signaux de chargement d'une valeur initiale pour les compteurs CNTR respectivement A, B, C, D, et les signaux SELDEPX, SELDEPY, SELDEPH, SELDEPV,sont des signaux d'information pour commander le choix de la variable transmise par des multiplexeurs MUX, variable qui est soit zéro, soit respectivement OFPELX, OFPELY, le complément à deux de OFPELX, le complément à deux de OFPELY.

On veut d'abord accéder aux pixels 46, 47, 54, 55, 62, 63 situés tous sur une même rangée de la mémoire dans le bloc A. Pour cela on charge le compteur A CNTR avec la valeur OFPELX en agissant sur les signaux SELDEPX et LOADX, de même en agissant sur les signaux SELDEPY et LOADY on charge le compteur B CNTR avec la valeur OFPELY. De la même façon avec les signaux SELDEPH, SELDEPV, LOADH et LOADV on charge les compteurs C CNTR et D CNTR avec zéro indiqué par "O" sur la figure. A chaque nouveau pixel auquel on accède dans la mémoire, on incrémente les compteurs A CNTR et C CNTR. Lorsque la valeur de comptage du compteur A CNTR atteint H, OVERFX est mis à 1 ce qui entraîne l'incrémentation des compteurs B CNTR et D CNTR, et le chargement du compteur A CNTR avec OFPELX et du compteur C CNTR avec zéro et l'on recommence à incrémenter A CNTR et C CNTR, le cycle se poursuivant jusqu'à ce que le comptage dans B CNTR atteigne V ce qui met OVERFY à 1. A cet instant tous les pixels auxquels on voulait accéder dans le bloc A ont été atteints et rangés dans une mémoire tampon temporaire à des adresses qui sont fournies par les compteurs C CNTR et D CNTR.

On passe alors à l'accès aux pixels du bloc B. Pour cela on charge d'abord le compteur A CNTR avec zéro en agissant sur les fils de commande SELDEPX et LOADX, on charge les compteurs B CNTR et D CNTR comme pour l'accès au bloc A, on charge le compteur C CNTR avec le complément à 2 de OFPELX en agissant sur les fils de commande SELDEPH et LOADH, et un processus répétitif semblable à celui décrit pour accèder au bloc A prend place jusqu'à ce que la valeur de comptage du compteur B CNTR soit supérieure ou égale à V. On passe alors à l'accès aux pixels du bloc C en chargeant les compteurs C CNTR et B CNTR avec zéro, le compteur A CNTR avec OFPELX et le compteur D CNTR avec le complément à 2 de OFPELY et un processus répétitif intervient à nouveau, jusqu'à ce que la valeur de comptage du compteur D CNTR soit cette fois supérieure ou égale à V .

On accède enfin aux pixels du bloc D en chargeant les compteurs A CNTR et B CNTR avec zéro, les compteurs A CNTR et C CNTR avec respectivement les compléments à deux de OFPELX et OFPELY, en agissant toujours sur les mêmes fils de commande, et un processus répétitif intervient à nouveau, jusqu'à ce que la valeur de comptage du compteur D CNTR soit supérieure ou égale à V, ce qui termine l'accès au bloc de pixels recherché.

Le fonctionnement des compteurs C et D est semblable, et n'a pas besoin d'être décrit spécifiquement : il suffit de remplacer les signaux référencés X ou Y ci-dessus par les mêmes référencés H ou V, et de noter que les valeurs initiales à charger dans les compteurs sont les compléments à deux, engendrés par des modules référencés 2/COMPL, des valeurs OFPELX et OFPELY. Ces compteurs fournissent les valeurs BUFADRH et BUFADRV qui sont les adresses relatives du pixel à l'intérieur du bloc décalé, et permettent d'adresser une mémoire tampon utilisée pour le traitement d'un bloc.

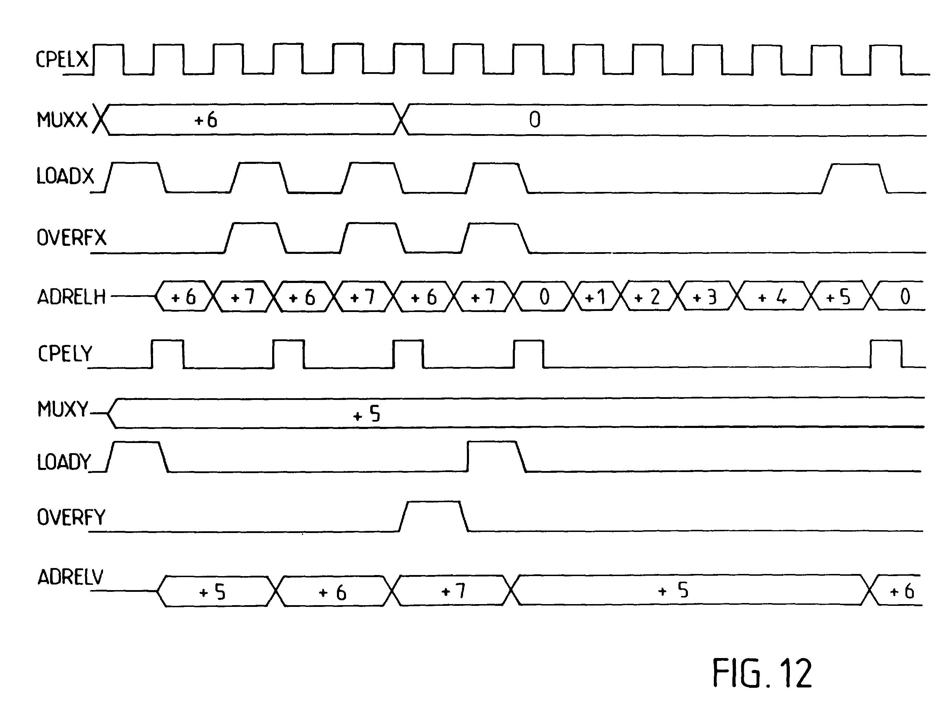

Le fonctionnement du dispositif GENADR est illustré par la figure 12 où sont représentés les signaux de contrôle relatifs au dispositif GENADR et correspondant à l'exemple illustré en figures 5 et 6. Le signal CPELX est l'horloge dont une période correspond au temps de traitement d'un pixel ; la ligne MUXX indique l'action du multiplexeur : sa sortie est positionnée à OFPELX (= +6) pendant les six périodes correspondant aux six pixels 46, 47, 54, 55, 62, 63 du bloc A, puis elle est positionnée sur zéro pour les autres blocs B et D et sur la position OFPELX pour le bloc C ; le signal LOADX commande le chargement dans le compteur A CNTR de ce qui sort du multiplexeur, avant le pixel 46 du bloc A, avant le pixel 54 du bloc A, avant le pixel 62 du bloc A, avant le pixel 40 du bloc B, etc ; le signal AVERFX est déclenché quand la valeur de comptage du compteur A CNTR atteint huit (=H) c'est-à-dire après deux temps puisqu'il était initialisé à six : enfin la ligne ADRELH indique le résultat, à savoir l'adresse relative du pixel dans son bloc de référence, pour les pixels 46, 47, 54, 55, 62, 63 du bloc A, puis les pixels 40 à 46, 48 du bloc B...Les lignes suivantes concernant l'adresse relative en vertical s'expliquent de la même façon à ceci près que l'horloge CPELY y est déclenchée en correspondance avec le signal LOADX. Par exemple lorsqu'on passe, dans le bloc B, du pixel 45 au pixel 48, il faut charger la valeur "48" dans A CNTR et en même temps incrémenter B CNTR.

Le dispositif BLKADREL qui forme l'adresse relative du pixel à partir de ses coordonnées horizontales et verticales dans le bloc, et le dispositif MEMADR qui est chargé de former l'adresse de chaque pixel à partir du numéro de bloc et de l'adresse relative du pixel dans le bloc, sont les mêmes que ceux indiqués figure 4 sous les mêmes références.

Lorsque le décalage est nul, le dispositif précédemment décrit peut être sensiblement simplifié du fait que l'on génère des adresses de pixels toujours situés à l'intérieur d'un même bloc mémoire. On utilise alors le dispositif d'adressage représenté par la figure 13 qui possède une structure similaire à celle du dispositif décrit ci-dessus pour le calcul des adresses d'un bloc compensé en mouvement. Les modules CNTRBLK, NUMBLK, MEMADR, OP sont identiques à ceux déja décrits sous les mêmes références. Le module ADRBLK est représenté plus en détail à la figure 14. Il est constitué par un décompteur qui décompte sous l'action d'une horloge CPEL et est initialisé par la valeur H*V sous l'action d'une commande LOAD. La valeur de comptage qu'il fournit est ADREL et il indique qu'il est arrivé à sa capacité maximale par un signal OVERF.

**Revendications**

1.  Procédé pour gérer le stockage dans une mémoire d'un système de traitement d'images, ladite mémoire de type dynamique étant organisée en rangées et en colonnes avec accès par salves, procédé dans lequel les images sont traitées par blocs, chacun des blocs étant carré ou rectangulaire et contenant plusieurs pixels (H*V) dans chaque direction horizontale et verticale, les pixels à l'intérieur d'un bloc étant décrits en considérant les pixels les uns après les autres par lignes parallèles successives dans le bloc (fig 2), les dimensions horizontale et verticale (H,V) des blocs, exprimées en nombre de pixels, étant des puissances entières de deux (m,p), caractérisé en ce que, dans la mémoire, les différents pixels d'un bloc sont placés dans des positions successives de la mémoire, de façon telle que, les lignes du bloc sont placées à la suite l'une de l'autre dans une même rangée de la mémoire, les descriptions d'une pluralité de blocs étant placées également à la suite l'une de l'autre dans l'ordre de leur numéros dans une même rangée de la mémoire, en passant à une rangée suivante lorsqu'une rangée est pleine, le numéro d'un bloc étant calculé, pour un pixel donné, à partir des coordonnées (x,y) de ce pixel dans l'image, la division entière de la coordonnée horizontale par la dimension horizontale d'un bloc fournissant la position horizontale (ADBLOCH) dans l'image, du bloc contenant le pixel, la division entière de la coordonnée verticale par la dimension verticale d'un bloc fournissant sa position verticale (ADBLOCV), le numéro du bloc étant finalement égal à la somme de la dite position horizontale et du produit de la dite position verticale par le nombre de blocs d'une ligne d'image, le rang et la colonne correspondants dans la mémoire étant prédéterminés pour un numéro de bloc donné.

2.  Procédé selon la revendication 1, caractérisé en ce que les contenus des différents blocs sont placés dans la mémoire en incrémentant l'adresse colonne jusqu'à sa valeur limite, puis cette adresse est ramenée à zéro et l'adresse rangée est incrémentée, et ainsi de suite (fig 3).

3.  Procédé selon la revendication 1, caractérisé en ce que les opérations de calcul de l'adresse mémoire du début d'un bloc contenant un pixel donné sont réalisées sur des valeurs représentées par des mots binaires au moyen de dichotomies qui fournissent en tant que résultat d'une division entière les bits dont le rang est supérieur à la susdite puissance de deux (m ou p), et en tant que résultat d'une opération modulo les bits dont le rang est inférieur ou égal à cette même puissance de deux.

4. Dispositif muni d'une mémoire de type dynamique, organisée en rangées et en colonnes avec accès par salves, pour stocker une image traitée par blocs, chacun desdits blocs étant un carré ou un rectangle dont les dimensions horizontale H et verticale V exprimées en nombre de pixels sont des puissances entières de deux, respectivement m et p, la description des pixels contenus dans un bloc étant faite en considérant les pixels par lignes parallèles successives dans le bloc, caractérisé en ce que, les différents pixels d'un bloc étant placés en mémoire dans des positions successives de la mémoire, de façon telle que, les lignes du bloc sont placées à la suite l'une de l'autre dans une même rangée de la mémoire, les descriptions d'une pluralité de blocs étant placées également à la suite l'une de l'autre dans l'ordre de leur numéros dans une même rangée de la mémoire, en passant à une rangée suivante lorsqu'une rangée est pleine, il comporte des moyens pour calculer le numéro d'un bloc (NUMBLOC) dans la mémoire à partir des coordonnées x, y d'un pixel de ce bloc, qui sont constitués de deux opérateurs matériels (OP11, OP12) qui à partir des mots binaires représentant les valeurs de x et de y en extraient les bits de poids supérieur à respectivement m et p, d'un multiplieur (19) auquel sont fournis en tant que multiplicandes, d'une part le nombre de blocs par ligne d'image (NBLOCH), et d'autre part le mot binaire fait des bits extraits par l'un des susdits opérateurs dans le mot binaire représentant y (bits qui représentent la coordonnée verticale (ADBLOCV) dans l'image du bloc contenant le pixel), et d'un additionneur (20) auquel sont fournis pour y être additionnés, d'une part le résultat issu du susdit multiplieur, et d'autre part le mot binaire constitué par les bits extraits par l'autre des susdits opérateurs dans le mot binaire représentant x (bits qui représentent la coordonnée horizontale (ADBLOCH) dans l'image du bloc contenant le pixel).

5. Dispositif selon la revendication 4, caractérisé en ce que, la description complète de chaque bloc etant placée en mémoire dans l'ordre de description du bloc et les blocs étant placés l'un à la suite de l'autre dans la mémoire, il comporte des moyens pour calculer l'adresse relative (ADREL) d'un pixel dans un bloc à partir de son adresse x, y dans l'image, qui sont constitués de deux opérateurs matériels (OP11, OP12) extrayant respectivement à partir des mots binaires représentant la valeur de x et de y, les m et p bits de plus faible poids, les deux groupes de blocs extraits étant fournis à un autre opérateur matériel (CONC) qui décale de m bits vers la gauche le groupe de bits (ADRELV) extrait de y par l'un des susdits deux opérateurs, et le concatène avec le groupe de bits (ADRELH) extrait de x par l'autre des susdits deux opérateurs.

6. Dispositif selon l'une des revendications 4 ou 5, caractérisé en ce que, la description complète de chaque bloc étant placée en mémoire dans l'ordre de description du bloc et les blocs étant placés l'un à la suite de l'autre dans la mémoire, et l'accès à la mémoire étant organisé sur la base de l'adresse de début d'un bloc, il comporte des moyens pour calculer les adresses rangée et colonne (ADRX, ADRY) d'un pixel dans la mémoire à partir du numéro du bloc (NUMBLOC) qui contient ce pixel et de l'adresse relative (ADREL) du pixel dans le bloc, qui sont constitués d'un opérateur (OP21) séparant dans le mot binaire représentant le numéro du bloc (NUMBLOC) les "e" bits de plus faible poids, où "e" est un entier tel que deux puissance "e" est égal au nombre de blocs par rangée de mémoire, ces "e" bits étant amenés à un élément (CONC 22) de concaténation où ils sont décalés vers la gauche et concaténés avec les bits (ADREL) représentant l'adresse relative du pixel dans le bloc, pour fournir la composante (ADRX) de l'adresse recherchée dans la direction horizontale, c'est-à-dire le numéro de colonne de mémoire, les autres bits (de poids supérieur à "e") fournissant la composante (ADRY) de l'adresse recherchée dans la direction verticale, c'est-à-dire le numéro de rangée de mémoire.

7. Dispositif selon l'une quelconque des revendications 4 à 6, caractérisé en ce que, la description complète de chaque bloc étant placée en mémoire dans l'ordre de description du bloc et les blocs étant placés l'un à la suite de l'autre dans la mémoire, pour calculer l'adresse en mémoire (ADRELH, ADRELV) des pixels contenus dans un bloc de l'image qui est décalé par rapport à un bloc du susdit réseau, le calcul étant fait à partir de l'adresse (ADBLOCH, ADBLOCV) de ce bloc (A) du réseau, dit bloc de référence, et du décalage (DX, DY) du bloc décalé par rapport à ce bloc de référence en connaissant le nombre de blocs (NBLOCH) contenus horizontalement dans l'image, il comporte un ou plusieurs des moyens suivants :

- des premiers moyens (OFCAL) pour, à partir du décalage (DX, DY) du bloc décalé, calculer de combien le bloc est décalé horizontalement (OFBLKX) et verticalement (OFBLKY) par rapport au bloc de référence (A), et pour calculer sa position relative par rapport au bloc du réseau (B) qui contient son point de départ, horizontalement (OFPELX) et verticalement (OFPELY),
- des seconds moyens (NUMBLK) pour calculer à partir du décalage du bloc décalé (OFBLKX, OFBLKY), de l'adresse du bloc de référence (ADBLOCH, ADBLOCV), et du nombre de blocs par image en horizontal (NBLOCH), le numéro, dans l'image, du bloc (B) qui contient le point de départ du bloc décalé (NUMBLOC),

- des troisièmes moyens (GENADR) pour générer les deux composantes de l'adresse relative du pixel (ADRELH, ADRELV) à l'intérieur du bloc dont le numéro est donné par les moyens précédents (NUMBLK),
- des quatrièmes moyens (BLKADREL) pour décaler vers la gauche les bits de la composante verticale (ADRELV) de l'adresse relative du pixel et les concaténer avec les bits de la composante horizontale (ADRELH) de cette adresse relative, pour fournir une adresse "linéaire" relative (ADREL) dans le bloc de la mémoire,
- des cinquièmes moyens (MEMADR) constitués d'un opérateur (OP) séparant dans le mot binaire représentant le numéro du bloc (NUMBLOC) les "e" bits de plus faible poids, où "e" est un entier tel que deux puissance "e" est égal au nombre de blocs par rangée de mémoire, ces "e" bits étant amenés à un élément (CONC) de concaténation où ils sont décalés vers la gauche et cuncaténés avec les bits (ADREL) issus des moyens précédents pour fournir la composante (ADRX) de l'adresse recherchée dans la direction horizontale (numéro de colonne de mémoire), les autres bits dudit mot binaire fournissant la composante (ADRY) de l'adresse recherchée dans la direction verticale (numéro de rangée de mémoire).

**8.** Dispositif selon la revendication 7, caractérisé en ce que les premiers moyens (OFCAL) sont constitués d'un bloc (OP 31) séparant les m bits de plus faible poids dans le mot binaire exprimant la valeur dans la direction horizontale (DX) du décalage du bloc décalé par rapport au bloc de référence, et d'un bloc (OP 32) séparant les p bits de plus faible poids dans le mot binaire exprimant la valeur (DY) dans la direction verticale du décalage du bloc décalé par rapport au bloc de référence.

**9.** Dispositif selon la revendication 7, caractérisé en ce que les seconds moyens (NUMBLK) sont constitués d'un premier additionneur (33) faisant la somme de la valeur de l'adresse du bloc de référence dans la direction verticale (ADBLOCV) et de la valeur du décalage du bloc décalé dans la direction verticale (OFBLKY), d'un multiplieur (34) pour multiplier le résultat délivré par ce premier additionneur avec la valeur du nombre de blocs par image dans la direction horizontale (NBLOCH), d'un deuxième additionneur (35) faisant la somme de la valeur de l'adresse du bloc de référence dans la direction horizontale (ADBLOCH) et de la valeur du décalage du bloc décalé dans la direction horizontale (OFBLKX), et d'un troisième additionneur (36) faisant la somme de la valeur délivrée par le deuxième additionneur et de la valeur délivrée par le multiplieur.

**10.** Dispositif selon la revendication 7, caractérisé en ce que les troisièmes moyens (GENADR) sont constitués par un ou plusieurs des groupes d'éléments suivants :

- un groupe comprenant un multiplexeur (MUX) pour délivrer une valeur choisie entre, soit zéro, soit la valeur (OFPELX) de la position relative dans la direction horizontale du bloc décalé par rapport au bloc du réseau qui contient son point de départ, et un compteur (A CNTR) qui peut être initialisé avec la valeur délivrée par le multiplexeur et qui au rythme d'une horloge (CPELX) délivre la composante horizontale (ADRELH) d'une adresse relative du pixel,
- un groupe constitué de façon identique (MUX, B CNTR) et qui traite les éléments correspondants dans la direction verticale.
- un groupe comprenant un circuit arithmétique délivrant le complément à deux (2'COMPL) du mot binaire exprimant la valeur (OFPELX) de la position relative, dans la direction horizontale, du bloc décalé par rapport au bloc du réseau qui contient son point de départ, un multiplexeur (MUX) pour délivrer une valeur choisie entre, soit zéro, soit le susdit complément à deux, et un compteur (C CNTR) qui peut être initialisé avec la valeur délivrée par le multiplexeur et qui au rythme d'une horloge (CPELH) délivre la composante horizontale (BUFADRH) d'une adresse relative du pixel,
- un groupe constitué de façon identique (2'COMPL, MUX, D CNTR) et qui traite les éléments correspondants dans la direction verticale.

**Patentansprüche**

**1.** Verfahren zur Verwaltung und Abspeicherung eines Bildverarbeitungssystems, der besagte Speicher dynamischen Typs ist in Reihen und Spalten mit Kettenzugriff angeordnet, bei dem Verfahren werden die Bilder nach Blöcken verarbeitet, jeder dieser Blöcke ist quadratisch oder rechteckig und enthält in jeder horizontalen und vertikalen Richtung mehrere Pixel (H*V), die Pixel werden im Innern eines Blocks beschrieben, über die reihenweise Betrachtung der Pixel nach parallel aufeinanderfolgenden Zeilen im Block (Abb. 2), die horizontalen und vertikalen (H, V), in der Anzahl Pixel ausgedrückten Abmessungen der Blöcke sind ganze Potenzen von zwei (m,p), mit dem Merkmal, daß im Speicher die verschiedenen Pixel eines Blocks ein aufeinanderfolgenden Positionen angeordnet werden, derart, daß die Zeilen des Blocks nacheinander in einer selben Reihe des Speichers angeordnet werden, die Beschreibungen einer Vielzahl an Blöcken werden ebenfalls nacheinander in der Folge ihrer Nummer in eine selbe Reihe des Speichers angeordnet, mit dem Übergang zu einer folgenden Reihe, wenn eine Reihe voll ist, die Nummer eines Blocks für ein bestimmtes Pixel wird ausgehend von den Koordinaten (x,y) dieses Pixels im Bild berechnet, die ganze Teilung der horizontalen Koordinate durch die horizontale Größe eines Blocks diefert die horizontale (ADBLOCH) Position im Bild des das Pixel enthaltenden Blocks, die ganze Teilung der vertikalen Koordinate durch die vertikale Größe eines Blocks liefert ihre vertikale (ADBLOCV) Position, die Nummer des Blocks ist schließlich gleich der Summe der besagten horizontalen Position und des Produkts der besagten vertikalen Position mal der Anzahl Blocke einer Bildzeile, der Rang und die entspreche Spalte im Speicher werden für eine bestimmte Blocknummer im voraus bestimmt.

2. Verfahren laut Anspruch 1, mit dem Merkmal, daß man die Inhalte der verschiedenen Blöcke abspeichert, durch die Erhöhung der Spaltenadresse auf ihren Grenzwert, und daraufhin diese Adresse auf Null gebracht und die Reihenadresse erhöht wird usw. (Abb. 3).

3. Verfahren laut Anspruch 1, mit dem Merkmal, daß die Operationen zur Berechnung der Speicheradresse des Beginns eines ein beliebiges Pixel enthaltenden Blocks über die mit binären Wörtern dargestellten Werte vorgenommen werden, mittels Dichotomien, die als Ergebnis einer ganzen Teilung die Bits liefern, deren Rang höher als die weiter oben genannte Potenz von zwei (m oder p) ist, und als Ergebnis einer Modulo-Operation die Bits, deren Rang niederer oder gleich dieser selben Potenz von zwei ist.

4. Mit einem Speicher dynamischen Typs versehene Vorrichtung, in Reihen und Spalten mit Kettenzugriff angeordnet, um ein nach Blöcken verarbeitetes Bild zu speichern, jeder dieser Blöcke ist quadratisch oder rechteckig und seine horizontalen H und vertikalen V, in der Anzahl Pixel ausgedrückten Abmessungen sind ganze Potenzen von zwei, respektive m und p, wobei die Beschreibung der in einem Block enthaltenen Pixel unter Betrachtung der parallel aufeinanderfolgenden Zeilen in einem Block stattfindet, mit dem Merkmal, daß die verschiedenen abgespeicherten Pixel eines Blocks an aufeinanderfolgenden Positionen im Speicher angeordnet werden, derart, daß die Zeilen eines Blocks nacheinander in derselben Reihe des Speichers angeorndet werden und auch die Beschreibungen einer Vielzahl an Blöcken ebenfalls nacheinander in der Folge ihrer Nummern in derselben Reihe des Speichers angeordnet werden, wobei von einer Reihe zur folgenden übergegangen wird, wenn eine Reihe voll ist, die Mittel zur Berechnung der Blocknummer (NUMBLOC) im Speicher enthält, ausgehend von den Koordinaten x, y eines Pixels dieses Blocks, die aus zwei materiellen Operatoren (OP11, OP12) gebildet werden, die anhand der binären, die Werte x und y darstellenden Wörter daraus die Bits höheren Stellenwerts zu jeweils m und p aus einem Multiplikator (19) entnehmen, dem als Multiplikanden einerseits die Anzahl der Blöcke pro Bildzeile (NBLOCH) und andererseits das binäre Wort geliefert wird, bestehend aus den Bits, die von einem der obengenannten Operatoren aus dem binären, y darstellenden Wort entnommen werden (diese Bits stellen die vertikale Koordinate (ADBLOCV) im Bild des das Pixel enthaltenden Blocks dar), und einen Addierer (20), dem um darin addiert zu werden einerseits das aus dem obengenannten Multiplikator kommende Ergebnis und andererseits das binäre Wort zugeführt werden, bestehend aus den Bits, die von dem anderen obengenannten Operatoren aus dem binären, x darstellenden Wort entnommen werden (diese Bits stellen die horizontale Koordinate (ADBLOCH) im Bild des das Pixel enthaltenden Blocks dar).

5. Vorrichtung laut Anspruch 4, mit dem Merkmal, daß die vollständige Beschreibung jedes Blocks in der Folge der Beschreibung des Blocks im Speicher angeordnet wird und die Blöcke aufeinanderfolgend im Speicher angeorndet werden, das Mittel zur Berechnung der relativen Adresse (ADREL) eines Pixels in einem Block anhand seiner Adresse x, y im Bild enthält, die aus zwei materiellen Operatoren (OP11, OP12) gebildet werden und jeweils aus binären, die Werte x und y dargestellten Wörtern die m und p Bits geringsten Stellenwerts entnehmen, die beiden entnommenen Blockgruppen werden einem anderen materiellen Operator (CONC) zugeführt, der die von einem der beiden obengenannten Operatoren aus y entnommene Gruppe Bits (ADRELV) um m Bits nach links versetzt und sie mit der von x von dem anderen der beiden obengenannten Operatoren entnommenen Gruppe Bits (ADRELH) verkettet.

6. Vorrichtung laut einem der Ansprüche 4 oder 5, mit dem Merkmal, daß die vollständige Beschreibung jedes Blocks in der Folge der Beschreibung des Blocks im Speicher angeordnet wird und die Blöcke aufeinanderfolgend im Speicher angeorndet werden und der Zugriff zum Speicher auf der Grundlage der Adresse des Beginns des Blocks organisiert ist, die Mittel enthält, um die Spalten- und Zeilenadressen (ADRX, ADRY) eines Pixels im Speicher anhand der Blocknummer (NUMBLOC) zu berechnen, die dieses Pixel enthält, und der relativen (ADREL) Adresse des Pixels im Block, die aus einem Operatoren (OP21) gebildet werden, der in einem binären, die Blocknummer (NUMBLOC) darstellenden Wort die "e" Bits geringsten Stellenwerts trennt, wobei "e" eine Ganzzahl ist, so daß zwei Potenz "e" gleich der Anzahl Blöcke pro Speicherzeile ist, diese "e" Bits werden an ein Verkettungselement (CONC 22) geleitet, wo sie nach links versetzt werden und mit den die relative Pixeladresse im Block darstellenden Bits (ADREL) verkettet werden, um die Komponente (ADRX) der gesuchten Adresse in horizontaler Richtung zu finden, d.h. die Nummer der Speicherspalte, die anderen Bits (eines Stellenwerts über "e") liefern die Komponente (ADRY) der gesuchten Adresse in vertikaler Richtung, d.h. die Zeilennummer des Speichers.

7. Vorrichtung laut einem der Ansprüche 4 bis 6, mit dem Merkmal, daß die vollständige Beschreibung jedes Blocks in der Folge der Beschreibung des Blocks im Speicher angeordnet wird und die Blöcke aufeinanderfolgend im Speicher angeorndet werden, um zur Berechnung der in einem Bildblock enthalten, in bezug auf einen Block des obengenannten Netzes versetzten Pixelspeicheradresse (ADRELH, ADRELV) die Berechnung ausgehend von der Adresse (ADBLOCH, ADBLOCV) dieses als Referenzblock (A) bezeichneten Netzblocks und der Versetzung (DX, DY) des versetzten Blocks in bezug auf diesen Referenzblock vorzunehmen, und unter Kenntnis der Anzahl horizontal im Bild enthaltenen Blöcke (NBLOCH) sind in der Vorrichtung eine oder mehrere der folgenden Einheiten enthalten:

-   erste Mittel (OFCAL), um ausgehend von der Versetzung (DX, DY) des versetzten Blocks zu berechnen, um wieviel der Block horizontal (OFBLKX) und vertikal (OFBLKY) in bezug auf den Referenzblock (A) versetzt ist, und um seine relative Position in bezug zu dem seinen Ausgangspunkt enthaltenden Netzblock (B) zu berechnen, horizontal (OFPELX) und vertikal (OFPELY),
-   zweite Mittel (NUMBLK), um ausgehend von der Versetzung des versetzten Blocks (OFBLKX, OFBLKY), der Adresse des Referenzblocks (ADBLOCH, ADBLOCV) und der Anzahl horizontaler Blöcke pro Bild im Bild (NBLOCH) die Nummer des Blocks (B) zu berechnen, der den Ausgangspunkt des versetzten Blocks (NUMBLOC) enthält,
-   dritte Mittel (GENADR), um die beiden Komponenten der relativen Pixeladresse (ADRELH, ADRELV) im Innern des Blocks zu erzeugen, dessen Nummer von den vorhergehenden Mitteln (NUMBLK) gegeben wird,
-   vierte Mittel (BLKADREL) zur Versetzung nach links der Bits der vertikalen (ADRELV) Komponente der relativen Pixeladresse und ihre Verkettung mit den Bits der horizontalen Komponente (ADRELH) dieser relativen Adresse, um eine relative "lineare" Adresse (ADREL) im Speicherblock zu liefern,
-   fünfte Mittel (MEMADR), bestehend aus einem Operator (OP), der im binären, die Nummer des Blocks (NUMBLOCK) angebenden Wort die "e" Bits geringsten Stellenwerts trennt, wobei "e" eine Ganzzahl ist, so daß zwei Potenz "e" gleich der Anzahl Blöcke pro Speicherzeile ist, diese "e" Bits werden an ein Verkettungselement (CONC) geleitet, wo sie nach links versetzt werden und mit den die relative Pixeladresse im Block darstellenden Bits (ADREL) verkettet werden, um die Komponente (ADRX) der gesuchten Adresse in horizontaler Richtung zu finden (Nummer der Speicherspalte), die anderen Bits des besagten binären Worts liefern die Komponente (ADRY) der gesuchten Adresse in vertikaler Richtung (Nummer der Speicherreihe).

8. Vorrichtung laut Anspruch 7, mit dem Merkmal, daß die obengenannten ersten Mittel (OFCAL) mit einem Block (OP31) zur Trennung der m Bits geringsten Stellenwerts im binären Wort gebildet sind, der den Wert in horizontaler Richtung der Versetzung (DX) des versetzten Block in bezug auf den Referenzblock gibt, und mit einem Block (OP32) zur Trennung der p Bits geringsten Stellenwerts im binären Wort, der den Wert (DY) in vertikaler Richtung der Versetzung des versetzten Blocks in bezug auf den Referenzblock gibt.

9. Vorrichtung laut Anspruch 7, mit dem Merkmal, daß die besagten zweiten Mittel (NUMBLK) von einem ersten Addierer (33) gebildet werden, der die Summe des Wertes der Adresse des Referenzblocks in vertikaler Richtung (ADBLOCV) und des Werts der Versetzung des versetzten Blocks in vertikaler Richtung (OFBLKY) berechnet, einem Multiplikator (34) zur Multiplikation des von diesem ersten Addierers gelieferten Werts mit der Anzahl Blöcke pro Bild in horizontaler Richtung (NBLOCH), einem zweiten Addierer (35), der die Summe des Werts der Adresse des Referenzblocks in horizontale Richtung (ADBLOCH) und des Werts der Versetzung des versetzten Blocks in horizontale Richtung (OFBLKX) berechnet, und einem dritten Addierer (36) ersetzt werden, der die Summe des vom zweiten Addierer gelieferten Werts und des vom Multiplikator gelieferten Werts berechnet.

10. Vorrichtung laut Anspruch 7, mit dem Merkmal, daß die dritten Mittel (GENADR) aus einer oder mehrerer Gruppen folgender Elemente gebildet werden:

-   einer Gruppe, die einen Multiplexer (MUX) enthält, der einen entweder zwischen Null oder dem Wert (OFPELX) der relativen Position in horizontaler Richtung des im Vergleich zum Block des Netzes, der seinen Ausgangspunkt enthält, versetzten Blocks gewählten Wert liefert, und einen Zähler (A CNTR), der mit einem Wert aktiviert werden kann, der vom Multiplexer geliefert wird und der im Zeittakt (CPELX) die horizontale Komponente (ADRELH) einer relativen Adresse des Pixels liefert,

- einer identisch zusammengestellten Gruppe (MUX, B CNTR), die die entsprechenden Elemente in vertikaler Richtung behandelt,

- einer Gruppe, die eine arithmetische Schaltung enthält, die das Komplement (2'COMPL) zu zwei des binären Worts liefert und den Wert (OFPELX) der relativen Position in horizontaler Richtung des in bezug auf den seinen Ausgangspunkt enthaltenden Block des Netzes versetzten Blocks liefert, einen Multiplexer (MUX) zur Abgabe eines entweder zwischen Null oder der obengenannten Ergänzung zu zwei gewählten Werts, und einen Zähler (C CNTR), der mit einem Wert aktiviert werden kann, der vom Multiplexer geliefert wird und der im Zeittakt (CPELH) die horizontale (BUFADRH) Komponente einer relativen Adresse des Pixels liefert,

- einer identisch zusammengestellten Gruppe (2'COMPL, MUX, D CNTR), die die entsprechenden Elemente in vertikaler Richtung behandelt.

## Claims

1.  A method of managing the storage in a memory of a picture-processing system, said memory being of the dynamic type organized in rows and columns with burst-type access, in which method the pictures are processed blockwise, each block being square or rectangular and comprising a plurality of pixels (H*V) in each horizontal and vertical direction, the pixels within a block being written by considering the pixels one after the other in successive parallel lines in the block (Fig. 2), the horizontal and vertical dimensions (H,V) of the blocks, expressed in a number of pixels, being integral powers of two (m,p), characterized in that, in the memory, the different pixels of a block are entered in successive positions of the memory, such that the lines of the block are entered one after the other in the same row of the memory, the descriptions of a plurality of blocks also being entered one after the other in the order of their number in the same row of the memory by passing to a subsequent row when a row is full, the number of a block being calculated for a given pixel on the basis of coordinates (x,y) of this pixel in the picture, the integral division of the horizontal coordinate by the horizontal dimension of a block furnishing the horizontal position (ADBLOCH) in the picture of the block containing the pixel, the integral division of the vertical coordinate by the vertical dimension of a block furnishing its vertical position (ADBLOCV), the number of the block being finally equal to the sum of said horizontal position and the product of said vertical position by the number of blocks of a line of the picture, the corresponding row and column in the memory being predetermined for a number of the given block.

2.  A method as claimed in Claim 1, characterized in that the contents of the different blocks are stored in the memory by incrementing the column address to its limit value, thereafter this address is reset to zero and the row address is incremented, and so forth (Fig. 3).

3.  A method as claimed in Claim 1, characterized in that the memory address calculations of the start of a block containing a given pixel are performed on values which are represented by binary words by means of dichotomies which as the result of an integral division supply the bits whose order is higher than said power of two (m or p), and as the result of a modulo operation supply the bits whose order is less than or equal to this same power of two.

4.  A device including a memory of the dynamic type organized in rows and columns with burst-type access, for storing a blockwise processed picture, each of said blocks being a square or a rectangle whose horizontal and vertical dimensions H and V expressed in a number of pixels are integral powers of two, m and p, respectively, the description of the pixels contained in a block being effected by considering the pixels in successive parallel lines in the block, characterized in that, the different pixels of a block being entered in successive positions of the memory, such that the lines of the block are entered one after the other in the same row of the memory, the descriptions of a plurality of blocks also being entered one after the other in the order of their number in the same row of the memory by passing to a subsequent row when a row is full, it comprises means for calculating the number of a block (NUMBLOC) in the memory from the x, y coordinates of a pixel of this block, which means are formed by two material operators (OP11, OP12) which extract the bits of a weight higher than m and p from the binary words representing the values of x and y, respectively, a multiplier (19) which receives as multiplicands the number of blocks per picture line (NBLOCH) and also the binary word formed by the bits extracted by one of said operators from the binary word representing y (which bits represent the vertical coordinate (ADBLOCV) in the picture of the block containing the pixel), and an adder (20) which receives, for the purpose of addition, the result furnished by said multiplier and also the binary word formed by the bits extracted by the other of said operators from the binary word representing x (which bits represent the horizontal coordinate (ADBLOCH) in the picture of the block containing the pixel).

5. A device as claimed in Claim 4, characterized in that, the complete description of each block being stored in the memory in the order of description of the block and the blocks being entered one after the other in the memory, it comprises means for calculating the relative address (ADREL) of a pixel in a block from its address x, y in the picture, which means are formed by two material operators (OP11, OP12) which extract the least significant m and p bits from the binary words representing the values of x and y, the two extracted groups of blocks being applied to another material operator (CONC) which shifts to the left through m bits the groups of bits (ADRELV) extracted from y by one of said two operators, and concatenates them with the group of bits (ADRELH) extracted from x by the other of said two operators.

6. A device as claimed in Claim 4 or 5, characterized in that, the complete description of each block being stored in the memory in the order of description of the block and the blocks being entered one after the other in the memory, and the access to the memory being organized on the basis of the starting address of a block, it comprises means for calculating the row and column addresses (ADRX, ADRY) of a pixel in the memory from the number of the block (NUMBLOC) which contains this pixel and the relative address (ADREL) of the pixel in the block, which are constituted by an operator (OP21) which separates in the binary word representing the number of the block (NUMBLOC) the "e" least significant bits, wherein "e" is an integer such that two power "e" is equal to the number of blocks in each memory row, these "e" bits being conveyed to a concatenation element (CONC 22) wherein they are shifted to the left and concatenated with the bits (ADREL) which represent the relative address of the pixel in the block, to supply the component (ADRX) of the address searched in the horizontal direction, i.e. the number of the memory column, the other bits (whose significance exceeds "e") supplying the component (ADRY) of the address searched in the vertical direction, i.e. the row number of the memory.

7. A device as claimed in any one of Claims 4 to 6, characterized in that, the complete description of each block being stored in the memory in the order of description of the block and the blocks being entered one after the other in the memory, to calculate the address in the memory (ADRELH, ADRELV) of the pixels contained in a picture block which is shifted with respect to a block of said network, the calculation being effected from the address (ADBLOCH, ADBLOCV) of this block (A) of the network, being the reference block, and of the shift (DX, DY) of the block shifted with respect to this reference block by knowing the number of blocks (NBLOCH) contained in the horizontal direction in the picture, it comprises one or several of the following means:

- first means (OFCAL) for calculating, from the shift (DX, DY) of the shifted block, how far the block has been shifted in the horizontal direction (OFBLKX) and the vertical direction (OFBLKY) with respect to the reference block (A) and for calculating its relative position with respect to the network block (B) containing its starting point, horizontally (OFPELX) and vertically (OFPELY),
- second means (NUMBLK) for calculating, from the shift of the shifted block (OFBLKX, OFBLKY), from the address of the reference block (ADBLOCH, ADBLOCV), and from the number of the blocks of each picture in the horizontal direction (NBLOCH), the number, in the picture, of the block (B) containing the starting point of the shifted block (NUMBLOC),
- third means (GENADR) for generating the two components of the relative address of the pixel (ADRELH, ADRELV) within the block whose number is supplied by the preceding means (NUMBLK),
- fourth means (BLKADREL) for shifting to the left the bits of the vertical component (ADRELV) of the relative address of the pixel and to concatenate them with the bits of the horizontal component (ADRELH) of this relative address, in order to furnish a relative "linear" address (ADREL) in the memory block,
- fifth means (MEMADR) constituted by an operator (OP) which in the binary word indicating the number of the block (NUMBLOC) separates the "e" least significant bits, where "e" is an integer such that two powers "e" are equal to the number of blocks in each memory row, these "e" bits being conveyed to a concatenation element (CONC) where they are shifted to the left and concatenated with the bits (ADREL) supplied by the preceding means to furnish the component (ADRX) of the address searched in the horizontal direction (number of the memory column), the further bits of said binary word furnishing the component (ADRY) of the address searched in the vertical direction (number of the memory row).

8. A device as claimed in Claim 7, characterized in that the first means (OFCAL) are constituted by a block (OP 31) separating the least significant m bits in the binary word expressing the value in the horizontal direction (DX) of the shift of the block shifted with respect to the reference block, and a block (OP 32) separating the least significant p bits in the binary word expressing the value (DY) in the vertical direction of the shift of the block shifted with respect to the reference block.

9. A device as claimed in Claim 7, characterized in that the second means (NUMBLK) are constituted by a first adder (33) taking the sum of the value of the reference block address in the vertical direction (ADBLOCV) and the value of the shift of the block shifted in the vertical direction (OFBLKY), a multiplier (34) for multiplying the result produced by this first adder by the value of the number of blocks per picture in the horizontal direction (NBLOCH), a second adder (35) taking the sum of the value of the reference block address in the horizontal direction (ADBLOCH) and the value of the shift of the block shifted in the horizontal direction (OFBLKX), and a third adder (36) taking the sum of the value supplied by the second adder and of the value supplied by the multiplier.

10. A device as claimed in Claim 7, characterized in that the third means (GENADR) are constituted by one or several groups of the following elements:

- a group comprising a multiplexer (MUX) for supplying a value chosen from either zero or the value (OFPELX) of the relative position, in the horizontal direction, of the block shifted with respect to the block of the network containing its starting point, and a counter (A CNTR) which can be initialized with the value supplied by the multiplexer and which, at the rate of a clock (CPELX), supplies the horizontal component (ADRELH) of a relative address of the pixel,
- a group which is constituted in an identical manner (MUX, B CNTR) and processes the corresponding elements in the vertical direction,
- a group comprising an arithmetic circuit supplying the two's complement (2'COMPL) of the binary word expressing the value (OFPELX) of the relative position, in the horizontal direction, of the biock shifted with respect to the block of the network containing its starting point, a multiplexer (MUX) for supplying a value chosen between either zero or said two's complement, and a counter (C CNTR) which can be initialized with the value supplied by the multiplexer and which, at the rate of a clock (CPELH), supplies the horizontal component (BUFADRH) of a relative address of the pixel,
- a group which is constituted in an identical manner (2'COMPL, MUX, D CNTR) and processes the corresponding elements in the vertical direction.

FIG. 1

FIG. 2

FIG. 3

FIG. 4

DX = +6

DY = +5

| | | | | | | |
|---|---|---|---|---|---|---|
| 0 | 1 | 2 | 3 | 4 | 5 | 6 7 |
| 8 | 9 | 10 | 11 | 12 | 13 | 14 15 |

A

B

| 40 | 41 | 42 | 43 | 44 | 45 | 46 47 | 40 41 42 43 44 45 | 46 47 |
| 54 | 55 | 48 49 50 51 52 53 | 54 55 |
| 62 | 63 | 56 57 58 59 60 61 | 62 63 |
| 6 7 | 0 1 2 3 4 5 |
| 14 15 | 8 9 10 11 12 13 |
| 22 23 | 16 17 18 19 20 21 |
| 30 31 | 24 25 26 27 28 29 |
| 38 39 | 32 33 34 35 36 37 |

E

C

D

**FIG. 5**

0

MEMDIMH−1

A

54,56

B

48,...,53

46,47   62,63

40,...,45   56,...,61

14,15   30,31

C

8,....,13   24,...,29

D

6,7   22,23   38,39

0,...,5   16,...,21   32,...,37

**FIG. 6**

NBLOCV  NBLOCH

CBLK → CNTRBLK → FINIMA

ADBLOCH  ADBLOCV

DX
DY

OFCAL

OFBLKX
OFBLKY

NUMBLK

39
p
OFPELX
addy          c1          37
addx          c0     CK
OFPELY        m          38
41
40

NUMBLOC

CPELX          SELDEPX
CPELY          SELDEPY
CPELU          SELDEPH
CPELV          SELDEPV
OVERFX         LOADX
OVERFY    GENADR    LOADY
OVERFH         LOADU
OVERFY         LOADV

BUFADRH

BUFADRV

ADRELH   BLKADREL   ADREL   MEMADR
ADRELV

ADRX   ADRY

FIG. 7

FIG. 8

FIG. 9

FIG.10

FIG.11

FIG. 12

EP 0 440 301 B1

FIG.13

FIG.14